(19)

(11) **EP 3 163 206 B1**

(12) **EUROPEAN PATENT SPECIFICATION**

(45) Date of publication and mention of the grant of the patent:
**18.09.2019 Bulletin 2019/38**

(21) Application number: **14895870.5**

(22) Date of filing: **25.06.2014**

(51) Int Cl.:
***F24H 1/00*** *(2006.01)*
***F25B 30/02*** *(2006.01)*
***F24H 9/20*** *(2006.01)*
***F25B 40/00*** *(2006.01)*
***F25B 1/00*** *(2006.01)*
***F24H 4/04*** *(2006.01)*
***F25B 49/02*** *(2006.01)*

(86) International application number:
**PCT/JP2014/066849**

(87) International publication number:
**WO 2015/198424 (30.12.2015 Gazette 2015/52)**

(54) **HEAT PUMP APPARATUS**

WÄRMEPUMPENVORRICHTUNG

APPAREIL DE POMPE À CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.05.2017 Bulletin 2017/18**

(73) Proprietor: **Mitsubishi Electric Corporation**
**Chiyoda-ku**
**Tokyo 100-8310 (JP)**

(72) Inventors:
- **TAKAYAMA, Keisuke**
  **Tokyo 100-8310 (JP)**
- **KOIDE, Toru**
  **Tokyo 100-8310 (JP)**
- **AKAGI, Satoshi**
  **Tokyo 100-8310 (JP)**
- **TAKEUCHI, Fumihito**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
**EP-A2- 1 298 395**
**DE-A1-102009 007 259**
**JP-A- 2000 346 449**
**JP-A- 2005 147 437**
**JP-A- 2009 250 461**
**JP-A- 2011 069 502**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 163 206 B1

## Description

Field

The present invention relates to a heat pump apparatus.

Background

A heat pump hot water supply apparatus disclosed in PTL 1 includes: a temperature sensor that senses hot water temperature at an outlet of a refrigerant-water heat exchanger in a hot water circuit; and an operation controller configured to control rotation speed of a circulating pump in the hot water circuit based on a signal of the temperature sensor. The operation controller performs control on rotation speed of a circulating pump at the start of operation so that the hot water temperature at the outlet of the refrigerant-water heat exchanger in the hot water circuit becomes lower than a set hot water temperature. Then, the operation controller performs rotation speed control of the circulating pump so that the hot water temperature sensed by the temperature sensor matches the set hot water temperature.

A heat pump hot water supply apparatus disclosed in PTL 2 is controlled based on the following procedures. A circulating pump in a hot water circuit is stopped, and a refrigerant circuit is started. A circulating quantity in a steady state is calculated and is set as a target flow rate Qn. A temperature T of the water returning to a hot water storage tank is detected by a discharge temperature detector provided in a condenser.

When the temperature T becomes higher than a first preset temperature (40°C), a flow rate Q is set $\alpha$ times (1.1 times) larger than the target flow rate Qn, and circulation is started. When the temperature T reaches a second preset temperature (47°C), the flow rate Q is set to the target flow rate Qn.

JP 2000 346449 A discloses a heat pump hot water supplier with a refrigerant circulation circuit consisting of a compressor, a heat exchanger between refrigerant and water, a pressure reducing device and an evaporator which are connected sequentially, a hot-water supplying circuit consisting of a hot-water storage tank, a circulation pump and the heat exchanger between refrigerant and water which are connected sequentially, an outdoor air temperature detecting means for detecting an outdoor temperature, a discharging temperature detecting means for detecting the discharging temperature of the compressor, and a control means for controlling the opening degree of the pressure reducing device, so that the discharging temperature of the compressor will arrive at an objective discharging temperature preset with respect to the outdoor air temperature. The control means is provided with a non-sensitive time band, in which the opening degree of the pressure reducing device is kept in constant, upon starting the compressor, whereby the delay of rise of a temperature with respect to the pressure of the compressor under a transient condition upon starting is the same is waited, thereby improving the efficiency of operation upon starting and realizing a heat pump hot-water supplier high in the durability of the same.

DE 10 2009 007259 A1 discloses a water pump of the heat pump type which comprises a heat pump circuit, a water circuit, through which water flows into a water heat exchanger of the heat pump circuit, and a water pump disposed in the water circuit to detect a flow amount of water passing through the water heat exchanger, a detecting portion adapted to detect information regarding a boiling state of water in the water heat exchanger. Therein, a control device is configured to make a valve opening degree of a variable decompressing device of the heat pump cycle larger than that before the defrosting operation in a defrosting operation of an evaporator and to stop the operation of the water pump in the defrosting operation if it is determined that water does not reach the boiling state based on the information from the detecting portion.

EP 1 298 395 A2 discloses a heat pump type hot water supply system with a hot water storage tank, a circulation line connecting a water outlet at the lower part of the storage tank and a hot water inlet at the upper part thereof. The circulation line is provided partway therealong with a heat exchange line to be heated bv heat pump heat source. The system is configured to return hot water heated up in the heat exchange line to the hot water storage tank through the hot water inlet. When the heated water temperature of the heat exchange line is equal to or below a set point, the return of the water to the hot water storage tank through the hot water inlet is hindered, and when the heated temperature of the heat exchange line is above the set point, the outgoing water from the heat exchange line is returned to the hot water storage tank through the hot water inlet.

Citation List

Patent Literature

[PTL 1] JP 2002-250560 A

[PTL 2] JP 2001-255005 A

Summary

Technical Problem

In the conventional heat pump hot water supply apparatus described before, the hot water having a temperature lower than the target temperature flows into the tank for a while after the start of the heat accumulating operation for accumulating heat in the tank. This makes it difficult to increase heat accumulation amount in the tank.

The present invention has been made to solve the above-stated problem, and it is therefore an object of the present invention to provide a heat pump apparatus capable of preventing a low-temperature liquid from flowing into a tank while reducing deterioration in coefficient of performance (COP) at the start of heat accumulating operation.

Solution to Problem

A heat pump apparatus of the invention is defined in independent claim 1.

Advantageous Effects of Invention

According to the heat pump apparatus of the present invention, when the heat accumulating operation with the cold start is performed, the temperature of the liquid flowing out of the heat exchanger in the first stage of the heat accumulating operation is made lower than the temperature of the liquid flowing out of the heat exchanger in the second stage, so that deterioration in coefficient of performance (COP) can be reduced. When the heat accumulating operation with the hot start is performed, it becomes possible to prevent the low-temperature liquid from flowing into the tank.

Brief Description of Drawings

Fig. 1 is a configuration diagram illustrating a heat pump apparatus according to a first embodiment of the present invention.

Fig. 2 illustrates a refrigerant circuit of a heat pump unit in the first embodiment.

Fig. 3 is a graph view illustrating a temporal change in a heat pump outlet temperature in a heat accumulating operation with a cold start.

Fig. 4 is a graph view illustrating a temporal change in a water flow rate in the heat accumulating operation with the cold start.

Fig. 5 is a graph view illustrating a temporal change in coefficient of performance (COP) in the heat accumulating operation with the cold start.

Fig. 6 is a flowchart illustrating a process performed by a controller to calculate a first-stage hot water volume V1 and a second-stage hot water volume V2 in the first embodiment.

Fig. 7 is a flowchart illustrating a process performed by a controller to control heat accumulating operation in a second embodiment.

Description of Embodiments

Hereinafter, embodiments of the present invention will be described with reference to the drawings. It is to be noted that like component members are designated by like reference signs to omit redundant description. The present invention includes all the combinations of respective embodiments described hereinafter.

First Embodiment

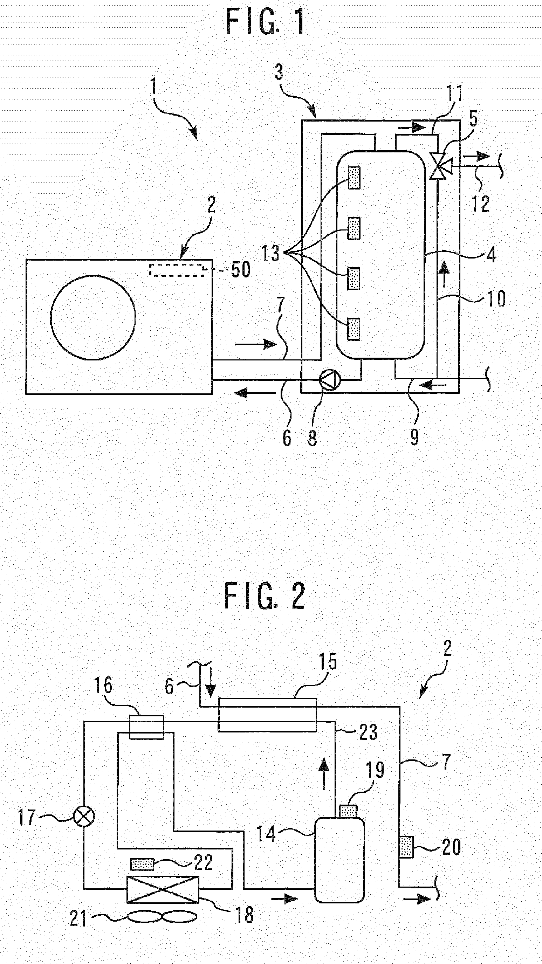

Fig. 1 is a configuration diagram illustrating a heat pump apparatus according to a first embodiment of the present invention. As illustrated in Fig. 1, a heat pump apparatus 1 of the first embodiment includes a heat pump unit 2 configured to heat water and a tank unit 3. The tank unit 3 includes a hot water tank 4 and a mixing valve 5. The heat pump unit 2 and the tank unit 3 are connected through conduits 6, 7 and through an electric interconnection (illustration omitted). The conduit 6 connects a lower portion of the hot water tank 4 and an inlet of the heat pump unit 2. The conduit 7 connects an outlet of the heat pump unit 2 and an upper portion of the hot water tank 4. A water pump 8 is connected in the way of the conduit 6. Although the water pump 8 is arranged in the tank unit 3 in the illustrated configuration, the water pump 8 may be arranged in the heat pump unit 2. Operation speed of the water pump 8 can be controlled in a variable manner by, for example, inverter control. Although the heat pump unit 2 and the tank unit 3 are separated in the first embodiment, the heat pump unit 2 and the tank unit 3 may be integrated in the present invention.

A feed water pipe 9 is connected to the lower portion of the hot water tank 4. The feed water pipe 9 supplies water from a water source, such as a waterworks system. A feed water pipe 10 branches from the feed water pipe 9. The feed water pipe 10 is connected to the mixing valve 5. The temperature of the water supplied from the feed water pipes 9 and 10 is hereinafter referred to as "feed water temperature". A hot-water pipe 11 connects the upper portion of the hot water tank 4 and the mixing valve 5. The mixing valve 5 mixes hot water, which is supplied from the hot water tank 4 through the hot-water pipe 11, with the water supplied through the feed water pipe 10. The hot water mixed by the mixing valve 5 is supplied to a hot-water supply terminal through the hot-water pipe 12. The hot-water supply temperature of the hot-water pipe 12 can be regulated by changing a mixing ratio of the mixing valve 5. When hot water flows from the upper portion of the hot water tank 4 into the hot-water pipe 11, an equivalent quantity of water flows from the feed water pipe 9 into the lower portion of the hot water tank 4, so that the hot water tank 4 is maintained in the state of being fully filled with water.

In the hot water tank 4, thermal stratification can be formed in which the upper side is at high temperature and the lower side is at low temperature. The hot water tank 4 is equipped with a plurality of tank temperature sensors 13 arranged at positions different in height from each other. The tank temperature sensors 13 can detect a remaining hot water volume and a heat accumulation amount in the hot water tank 4.

The heat pump apparatus 1 includes a controller 50. The controller 50 is configured with a microcomputer or the like, for example. The controller 50 includes: a storage unit including a ROM, a RAM, and a nonvolatile memory; a central processing unit (CPU) configured to execute arithmetic processing based on programs stored in the storage unit; and an input/output port configured to input and output external signals to/from the CPU. Actuators and sensors included in the heat pump apparatus 1 are each electrically connected to the controller 50. The controller 50 controls operation of the heat pump apparatus 1. In the illustrated configuration, the controller 50 is arranged in the heat pump unit 2. However, the controller 50 may be arranged in the tank unit 3, or the controller 50 may be arranged in the heat pump unit 2 and the tank unit 3 in a distributed manner.

Fig. 2 illustrates a refrigerant circuit of the heat pump unit 2 in the first embodiment. As illustrated in Fig. 2, the heat pump unit 2 has a refrigerant circuit in which a compressor 14, a water-refrigerant heat exchanger 15, a high-low pressure heat exchanger 16, an expansion valve 17, and an evaporator 18 are connected through refrigerant pipes. The compressor 14 compresses a refrigerant. The compressor 14 in the first embodiment is of a high-pressure shell type including a compression mechanism inside a shell, the shell being filled with a compressed high-pressure refrigerant. Placed on an upper surface of the shell of the compressor 14 is a compressor temperature sensor 19. The upper portion of the shell of the compressor 14 is connected to a discharge pipe 23 for discharging the refrigerant. The compressor temperature sensor 19 detects the temperature of the shell of the compressor 14. The temperature detected by the compressor temperature sensor 19 is hereinafter referred to as "compressor temperature". The temperature of the refrigerant discharged from the compressor 14 is hereinafter referred to as "discharged refrigerant temperature". In the first embodiment, the discharged refrigerant temperature can be regarded to be equal to the compressor temperature. In the first embodiment, the compressor temperature sensor 19 corresponds to "the means for detecting the compressor temperature".

The water-refrigerant heat exchanger 15 exchanges heat between the refrigerant and water. The conduit 6 is connected to a water inlet of the water-refrigerant heat exchanger 15. The conduit 7 is connected to a water outlet of the water-refrigerant heat exchanger 15. The conduit 7 is equipped with a temperature sensor 20 configured to detect the temperature of water (hot water) flowing out of the water-refrigerant heat exchanger 15. The temperature of the water (hot water) which flows out of the water-refrigerant heat exchanger 15 is hereinafter referred to as "heat pump outlet temperature". The high-low pressure heat exchanger 16 has a high-pressure portion and a low-pressure portion. The high-low pressure heat exchanger 16 exchanges heat between the refrigerant flowing through the high-pressure portion and the refrigerant flowing through the low-pressure portion. The expansion valve 17 is a pressure reduction device configured to decompress the high pressure refrigerant. The evaporator 18 exchanges heat between the refrigerant and the air. A fan 21 sends air (outside air) to the evaporator 18. An outside air temperature sensor 22 detects the temperature of outside air.

(Heat accumulating operation)

The heat pump apparatus 1 can perform heat accumulating operation in which the hot water heated by the heat pump unit 2 is accumulated in the hot water tank 4. In the heat accumulating operation, the water pump 8 and the heat pump unit 2 operate. The heat accumulating operation operates as follows. The water pump 8 pumps the water in the lower portion of the hot water tank 4 to the water-refrigerant heat exchanger 15 through the conduit 6. The hot water heated by the water-refrigerant heat exchanger 15 flows into the upper portion of the hot water tank 4 through the conduit 7. In the hot water tank 4, the hot water accumulates from the upper side to the lower side. The high pressure refrigerant filled in the shell of the compressor 14 is discharged from the compressor 14 to the discharge pipe 23, and flows into the water-refrigerant heat exchanger 15. In the water-refrigerant heat exchanger 15, water is heated with the heat of the high pressure refrigerant compressed by the compressor 14. The high pressure refrigerant cooled in the water-refrigerant heat exchanger 15 passes through the high-pressure portion of the high-low pressure heat exchanger 16, and is decompressed by the expansion valve 17. The low pressure refrigerant which has passed through the expansion valve 17 absorbs the heat of the air in the evaporator 18 and evaporates. The low pressure refrigerant evaporated in the evaporator 18 passes through the low-pressure portion of the high-low pressure heat exchanger 16, and is sucked into the compressor 14.

The controller 50 can control a flow rate of the water passing through the water-refrigerant heat exchanger 15 by controlling the operation speed of the water pump 8. Hereinafter, the flow rate of the water passing through the water-refrigerant heat exchanger 15 is simply referred to as "water flow rate". When the operation speed of the water pump 8 is accelerated, the water flow rate increases, whereas when the operation speed of the water pump 8 is decelerated, the water flow rate decreases. During the heat accumulating operation, the controller 50 can execute control, by adjusting the water flow rate, so that the heat pump outlet temperature matches a target value. The target value of the heat pump outlet temperature is hereinafter referred to as "target outlet temperature". When the water flow rate increases, the heat pump outlet temperature decreases. When the water flow rate decreases, the heat pump outlet temperature increases. The controller 50 can control the heat pump outlet temperature by adjusting the operation speed of the water pump 8 based on deviation between the target outlet temperature and an actual heat pump outlet temperature detected by the temperature sensor 20. When the actual heat pump outlet temperature is lower than the target outlet temperature, the controller 50 decelerates the operation speed of the water pump 8 to decrease the water flow rate. When the actual heat pump outlet temperature is higher than the target outlet temperature, the controller 50 accelerates the operation speed of the water pump 8 to increase the water flow rate. During the heat accumulating operation, the controller 50 can control the discharged refrigerant temperature by adjusting opening of the expansion valve 17.

The controller 50 determines a required heat accumulation amount Qd [kJ] that is required to be accumulated in the hot water tank 4 in the heat accumulating operation. The controller 50 may calculate the required heat accumulation amount Qd by predicting a heat demand based on the quantity of used hot water that has been used up to a previous day, start time of heat accumulating operation, outside air temperature, and the like. Volume of hot water to be accumulated in the hot water tank 4 in the heat accumulating operation is represented as Vhs [L]. Density of water is represented as ρw [kg/m3]. Specific heat of water is represented as Cpw [kJ/kgK]. Target hot water accumulation temperature is represented as Ths [°C]. Feed water temperature is represented as Twi [°C]. The target hot water accumulation temperature Ths is a target value of the temperature of hot water accumulated in the hot water tank 4. The target hot water accumulation temperature Ths is preferably 65°C or more in order to prevent propagation of legionella bacteria and the like.

When the total volume of the hot water accumulated in the hot water tank 4 in the heat accumulating operation can be heated up to the target hot water accumulation temperature Ths, the required heat accumulation amount Qd can be achieved by calculating the volume Vhs of the hot water to be accumulated in the hot water tank 4 in the heat accumulating operation based on a following expression:

$$Qd = Vhs \cdot \rho w \cdot Cpw(Ths - Twi)/1000 \qquad (1)$$

In the following description, the compressor temperature detected by the compressor temperature sensor 19 at the start of the heat accumulating operation is referred to as "starting temperature". In the first embodiment, the controller 50 compares the starting temperature with a threshold. For example, a value equal to the target hot water accumulation temperature Ths can be used as the threshold. Temperatures lower than the target hot water accumulation temperature Ths may be used as a threshold. In the case where the compressor 14 is operated until shortly before the start of the heat accumulating operation, the starting temperature can be higher than the threshold. When the starting temperature is higher than the threshold, the controller 50 determines a "hot start". In the case where the compressor 14 is not operated for a long time before the start of the heat accumulating operation, the starting temperature can be lower than the threshold. When the starting temperature is lower than the threshold, the controller 50 determines a "cold start".

In the case of the hot start, the controller 50 sets, from the beginning of the heat accumulating operation, a value equal to the target hot water accumulation temperature Ths as the target outlet temperature. That is, in the case of the hot start, the controller 50 controls the water flow rate, from the beginning of the heat accumulating operation, so that the heat pump outlet temperature matches the target hot water accumulation temperature Ths. In the case of the hot start, the heat pump outlet temperature converges at the target hot water accumulation temperature Ths shortly after the start of the heat accumulating operation.

In the case of the hot start, it becomes possible to prevent the hot water having a temperature lower than the target hot water accumulation temperature Ths from flowing into the hot water tank 4. Hence, the temperature of the hot water tank 4 and the heat accumulation amount in the hot water tank 4 can sufficiently be increased.

In the case of the cold start, the controller 50 divides the heat accumulating operation into a first stage and a second stage. In the first stage, the controller 50 sets a value lower than the target hot water accumulation temperature Ths as the target outlet temperature. The target outlet temperature set in the first stage is hereinafter referred to as "first-stage target temperature" represented by Two1. In the first stage, the controller 50 controls the water flow rate so that the heat pump outlet temperature matches the first-stage target temperature Two1 that is lower than the target hot water accumulation temperature Ths. In the first stage, the heat pump outlet temperature converges at the first-stage target temperature Two1. In the second stage, the controller 50 sets a value equal to the target hot water accumulation temperature Ths as the target outlet temperature. The target outlet temperature set in the second stage is hereinafter referred to as "second-stage target temperature" represented by Two2. In the first embodiment, the second-stage target temperature Two2 is equal to the target hot water accumulation temperature Ths. In the second stage, the controller 50 controls the water flow rate so that the heat pump outlet temperature matches the second-stage target temperature Two2. In the second stage, the heat pump outlet temperature converges at the second-stage target temperature Two2.

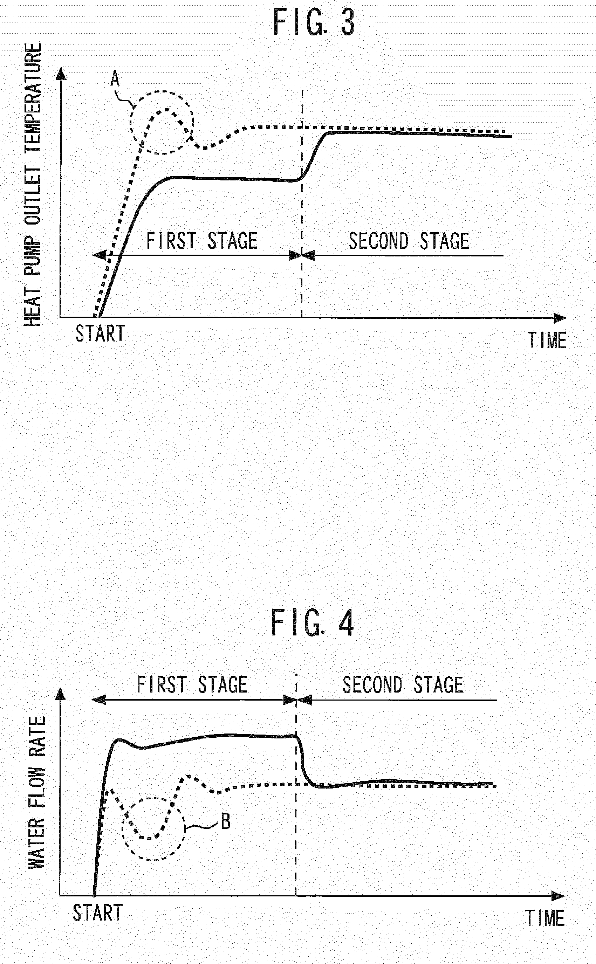

Fig. 3 is a graph view illustrating a temporal change in the heat pump outlet temperature in the heat accumulating operation with the cold start. A solid line in Fig. 3 represents the heat pump outlet temperature in the first embodiment. As illustrated in Fig. 3, the controller 50 makes the heat pump outlet temperature in the first stage lower than the heat pump outlet temperature in the second stage.

In the case of the cold start, elements having a large thermal capacity, such as the shell of the compressor 14 and the water-refrigerant heat exchanger 15, are low in temperature immediately after the start of the heat pump unit 2. Since heat is used to increase the temperature of these elements, the heat pump outlet temperature gradually increases. In this case, a period of time until the heat pump outlet temperature reaches the first-stage target temperature Two1 varies depending on the thermal capacity of the shell of the compressor 14 and the water-refrigerant heat exchanger 15, and the control speed of the expansion valve 17.

When the operation shifts from the first stage to the second stage, the target outlet temperature is changed from the first-stage target temperature Two1 to the second-stage target temperature Two2, so that the heat pump outlet temperature increases. After the shift to the second stage, the temperature of the shell of the compressor 14 and the water-refrigerant heat exchanger 15 further increases. Since heat is also used to increase the temperature of these elements, the heat pump outlet temperature gradually increases. However, since a temperature increment in this case is smaller than the temperature increment at the start-up, a period of the time required to increase the temperature is short.

Fig. 4 is a graph view illustrating a temporal change in the water flow rate in the heat accumulating operation with the cold start. A solid line in Fig. 4 illustrates the water flow rate in the first embodiment. As illustrated in Fig. 4, the controller 50 makes the water flow rate in the first stage higher than the water flow rate in the second stage.

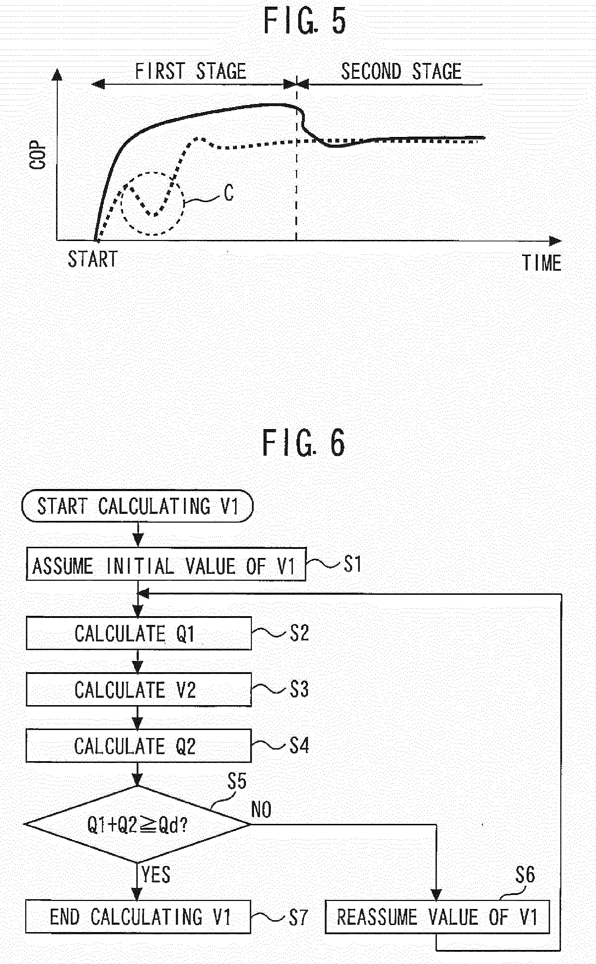

Fig. 5 is a graph view illustrating a temporal change in coefficient of performance (COP) in the heat accumulating operation with the cold start. A solid line in Fig. 5 represents the COP in the first embodiment.

Broken lines in Figs. 3, 4 and 5 each represent a temporal change in a comparative example. In the comparative example, a value equal to the target hot water accumulation temperature Ths is set as the target outlet temperature from the beginning of the heat accumulating operation with the cold start.

As indicated by a reference sign A in Fig. 3, an overshoot, which is an excess of the heat pump outlet temperature over the target hot water accumulation temperature Ths, occurs in the comparative example. Assume the case where a high target outlet temperature is set in the cold start. In this case, when the temperature of the discharged refrigerant increases, follow-up delay in control on the water flow rate tends to cause such an overshoot. As the heat pump outlet temperature is higher, the COP deteriorates more. As indicated by a reference sign C in Fig. 5, occurrence of the overshoot causes deterioration in the COP in the comparative example.

Contrary to this, in the first embodiment, the overshoot of the heat pump outlet temperature can be reduced by making the heat pump outlet temperature in the first stage lower than the heat pump outlet temperature in the second stage. As a result, deterioration in the COP can be reduced.

When the water flow rate is low, the water-refrigerant heat exchanger 15 has a low heat transfer efficiency, so that the COP is deteriorated. In the case of the cold start, the discharged refrigerant temperature is low in the beginning. Accordingly, the heat pump outlet temperature does not easily increase. As indicated by a reference sign B in Fig. 4, when a high target outlet temperature is set in the cold start, deviation between the target outlet temperature and the actual heat pump outlet temperature is enlarged. This leads to execution of control to achieve significant decrease in the water flow rate. Thus, in the comparative example, the water flow rate is significantly decreased, so that the heat transfer efficiency of the water-refrigerant heat exchanger 15 is deteriorated. As a result, the COP is deteriorated as indicated by a reference sign C in Fig. 5.

Contrary to this, as illustrated in Fig. 4, in the first embodiment, the first-stage target temperature Two1 is set lower than the second-stage target temperature Two2, so that the water flow rate in the first stage is higher than the water flow rate in the second stage. As a result, deterioration in the heat transfer efficiency of the water-refrigerant heat exchanger 15 can reliably be reduced in the first stage, so that a high COP can be obtained.

The water flow rate is proportional to the operation speed of the water pump 8. A resistance value of the water circuit varies with the length of the conduits 6 and 7, or a vertical interval between the heat pump unit 2 and the tank unit 3. After installation of the heat pump apparatus 1, the controller 50 may learn an initial value of the water flow rate, and correct an initial value of the operation speed of the water pump 8 based on the learned initial value.

The controller 50 can control a volume V1 of the hot water accumulated in the hot water tank 4 in the first stage and a volume V2 of the hot water accumulated in the hot water tank 4 in the second stage as described below. Hereinafter, the volume of the hot water to be accumulated in the hot water tank 4 in the first stage is referred to as "first-stage hot water volume", and the volume of the hot water to be accumulated in the hot water tank 4 in the second stage is referred to as "second-stage hot water volume". Fig. 6 is a flowchart illustrating a process performed by the controller 50 to calculate the first-stage hot water volume V1 and the second-stage hot water volume V2 in the first embodiment.

Hereinafter, the capacity of the hot water tank 4 available for heat accumulating operation is referred to as vacant capacity Vc [L]. For example, the vacant capacity Vc may be a value obtained by subtracting the remaining hot water volume detected by the tank temperature sensors 13 from the full capacity of the hot water tank 4.

In step S1 of Fig. 6, the controller 50 assumes a value as an initial value of the first-stage hot water volume V1. The initial value of the first-stage hot water volume V1 is preferably a relatively large value equal to or less than the vacant capacity Vc. For example, a value equal to the vacant capacity Vc may be assumed as the initial value of the first-stage hot water volume V1.

Next, the controller 50 shifts processing to step S2 to calculate the heat accumulation amount Q1 [kJ] in the first stage based on a following expression:

$$Q1=V1\cdot\rho w\cdot Cpw(Two1-Twi)/1000 \qquad (2)$$

Next, the controller 50 shifts processing to step S3 to calculate the second-stage hot water volume V2 based on a following expression:

$$Vc=V1+V2 \qquad (3)$$

Next, the controller 50 shifts processing to step S4 to calculate the heat accumulation amount Q2 [kJ] in the second stage based on a following expression:

$$Q2=V2\cdot\rho w\cdot Cpw(Two2-Twi)/1000 \qquad (4)$$

Next, the controller 50 shifts processing to step S5. In step S5, the controller 50 determines whether a sum of the heat accumulation amount Q1 in the first stage and the heat accumulation amount Q2 in the second stage is equal to or more than the required heat accumulation amount Qd. More specifically, in step S5, the controller 50 determines whether a following expression is satisfied:

$$Q1+Q2\geq Qd \qquad (5)$$

When the above expression (5) is not satisfied in step S5, the controller 50 shifts processing to step S6. In step S6, the controller 50 reassumes, as the first-stage hot water volume V1, a value slightly smaller than the value currently assumed as the first-stage hot water volume V1. Then, the controller 50 performs the process of step S2 and subsequent steps again. When the above expression (5) is satisfied in step S5, the controller 50 shifts processing to step S7, and ends the process of calculating the first-stage hot water volume V1.

Heating power of the heat pump unit 2 per hour is represented as Qhc [kW]. The heating power Qhc can be estimated based on the operation speed of the compressor 14, feed water temperature, outside air temperature, and the like. The controller 50 can calculate duration time t1 of the first stage and duration time t2 of the second stage based on a following expressions:

$$t1=Q1/Qhc$$

$$t2=Q2/Qhc \quad (6)$$

The controller 50 executes control so that the values calculated by the above expressions are set as the duration time t1 of the first stage and the duration time t2 of the second stage, respectively. As a result, the heat accumulation amount Q1 of the first stage and the heat accumulation amount Q2 of the second stage described before can be achieved.

As described in the foregoing, the controller 50 can control the first-stage hot water volume V1 and the second-stage hot water volume V2 based on the temperature detected by the tank temperature sensors 13. Accordingly, it becomes possible to reliably prevent running-out of the hot water. The controller 50 can also execute control so that the sum of the heat accumulation amount Q1 in the first stage and the heat accumulation amount Q2 in the second stage is equal to or more than the required heat accumulation amount Qd and that the sum of the first-stage hot water volume V1 and the second-stage hot water volume V2 is equal to or less than the vacant capacity Vc. As a result, in the case of the cold start, the required heat accumulation amount Qd can reliably be obtained. As illustrated in Fig. 5, the COP in the first stage is higher than the COP in the second stage. In the first embodiment, the first-stage hot water volume V1 can be maximized. Consequently, the COP in the entire heat accumulating operation can be enhanced.

In the flowchart of Fig. 6, hot water is accumulated by utilizing the entire vacant capacity Vc. However, it is possible to execute control so as to leave a margin in the capacity of the hot water tank 4 at the end of the heat accumulating operation.

In the first embodiment, the compressor temperature sensor 19 is attached to the surface of the shell of the compressor 14. However, the compressor temperature sensor 19 may be attached to the discharge pipe 23 of the compressor 14. The temperature of the refrigerant discharged shortly after the start-up of the compressor 14 may be regarded to be equal to the temperature of the shell of the compressor 14 at the start-up of the compressor 14. The controller 50 may detect the discharged refrigerant temperature with the compressor temperature sensor 19 attached to the discharge pipe 23 shortly after the start-up of the compressor 14, so as to determine whether the hot start or the cold start based on the detected temperature.

The controller 50 may estimate the temperature of the shell of the compressor 14 at the start of the heat accumulating operation as follows. When the compressor 14 is stopped, the controller 50 stores the temperature detected by the compressor temperature sensor 19 attached to the discharge pipe 23. The stored temperature may be regarded to be equal to the temperature of the shell of the compressor 14 at the time when the compressor 14 stops. A temperature decrement in the shell of the compressor 14 during the stoppage of the compressor 14 may be estimated based on stoppage time and outside air temperature. The controller 50 estimates the temperature decrement in the shell of the compressor 14 based on the stoppage time and the outside air temperature, and subtracts the temperature decrement from the temperature of the shell of the compressor 14 at the time when the compressor 14 stops, so that a starting temperature can be estimated. The operation of the controller 50 to estimate the temperature of the shell of the compressor 14 as described before corresponds to "the means for estimating the compressor temperature".

Second Embodiment

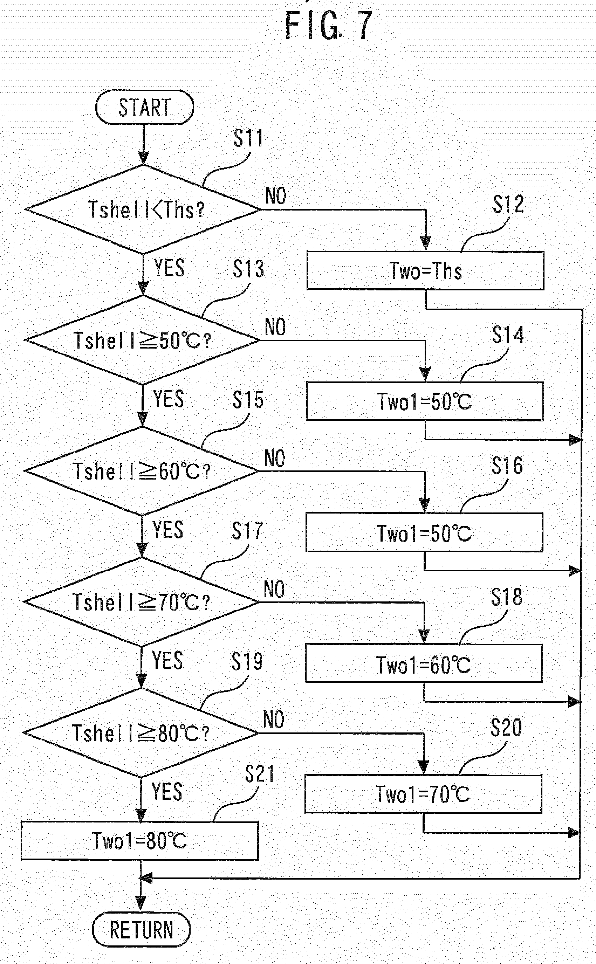

A description is now given of a second embodiment of the present invention with reference to Fig. 7. The description is focused on a difference from the first embodiment described in the foregoing. Identical or corresponding component members are designated by identical reference signs to omit the description thereof.

In the second embodiment, the compressor temperature detected by the compressor temperature sensor 19 is represented by Tshell. In the first embodiment, the first-stage target temperature Two1 has been described as a temporally constant value. In the second embodiment, the controller 50 gradually increases the first-stage target temperature Two1 as time progresses in the first stage. The controller 50 also gradually increases the first-stage target temperature Two1 as the compressor temperature Tshell increases in the first stage.

Fig. 7 is a flowchart illustrating a process performed by the controller 50 to control the heat accumulating operation in the second embodiment. During the heat accumulating operation, the controller 50 repeatedly executes the process of the flowchart in Fig. 7 on a periodic basis. In the second embodiment, the target hot water accumulation temperature Ths is 90°C.

In step S11 of Fig. 7, the controller 50 compares the compressor temperature Tshell with a threshold. Although the target hot water accumulation temperature Ths is used as the threshold, temperatures lower than the target hot water accumulation temperature Ths may be used as the threshold. When the compressor temperature Tshell is higher than the threshold (target hot water accumulation temperature Ths) in step S11, the controller 50 shifts processing to step S12. The controller 50 sets a value equal to the target hot water accumulation temperature Ths as the target outlet temperature Two in step S12.

The compressor temperature Tshell at the start of the heat accumulating operation corresponds to a starting temperature. When the compressor temperature Tshell is higher than the threshold (target hot water accumulation temperature Ths) in step S11 which is performed for the first time at the start of the heat accumulating operation, the operation corresponds to a hot start. In the case of the hot start, the processing shifts from step S11, which is performed for the first time, to step S12. Accordingly, from the beginning of the heat accumulating operation, a value equal to the target hot water accumulation temperature Ths is set as the target outlet temperature Two. Thus, in the case of the hot start, the controller 50 sets a value equal to the target hot water accumulation temperature Ths as the target outlet temperature Two from the beginning of the heat accumulating operation.

Contrary to this, when the compressor temperature Tshell is lower than the threshold (target hot water accumulation temperature Ths) in step S11 which is performed for the first time at the start of the heat accumulating operation, the operation corresponds to a cold start. When the compressor temperature Tshell is lower than the threshold (target hot water accumulation temperature Ths) in step S11, the controller 50 shifts processing to step S13. In step S13, the controller 50 determines whether the compressor temperature Tshell is 50°C or more. When the compressor temperature Tshell is less than 50°C, the controller 50 shifts processing to step S14. The controller 50 sets the first-stage target temperature Two1 to 50°C in step S14.

In the second embodiment, a lower limit of the first-stage target temperature Two1 is set to 50°C. When the first-stage target temperature Two1 is too low, the hot water accumulated in the hot water tank 4 in the first stage may be unable to be utilized for hot-water supply. To avoid such a situation, the lower limit of the first-stage target temperature Two1 is preferably set to about 50°C.

When the compressor temperature Tshell is 50°C or more in step S13, the controller 50 shifts processing to step S15. In step S15, the controller 50 determines whether the compressor temperature Tshell is 60°C or more. When the compressor temperature Tshell is less than 60°C, the controller 50 shifts processing to step S16. The controller 50 sets the first-stage target temperature Two1 to 50°C in step S16.

When the compressor temperature Tshell is 60°C or more in step S15, the controller 50 shifts processing to step S17. In step S17, the controller 50 determines whether the compressor temperature Tshell is 70°C or more. When the compressor temperature Tshell is less than 70°C, the controller 50 shifts processing to step S18. The controller 50 sets the first-stage target temperature Two1 to 60°C in step S18.

When the compressor temperature Tshell is 70°C or more in step S17, the controller 50 shifts processing to step S19. In step S19, the controller 50 determines whether the compressor temperature Tshell is 80°C or more. When the compressor temperature Tshell is less than 80°C, the controller 50 shifts processing to step S20. The controller 50 sets the first-stage target temperature Two1 to 70°C in step S20.

When the compressor temperature Tshell is 80°C or more in step S19, the controller 50 shifts processing to step S21. The controller 50 sets the first-stage target temperature Two1 to 80°C in step S21.

In the second embodiment, when the starting temperature is less than 60°C, the controller 50 repeatedly executes the process of the flowchart in Fig. 7. Accordingly, as time progresses, the first-stage target temperature Two1 increases to 50°C, 60°C, 70°C, and 80°C. Once the compressor temperature Tshell reaches the threshold (target hot water accumulation temperature Ths), the processing shifts from step S11 to step S12, so that a value equal to the target hot water accumulation temperature Ths is set as the target outlet temperature Two. When the target outlet temperature Two is set to a value equal to the target hot water accumulation temperature Ths in this way, the first stage is ended and the second stage is started.

When the starting temperature is 60°C or more and less than 70°C, the first-stage target temperature Two1 increases to 60°C, 70°C, and 80°C as time progresses. When the starting temperature is 70°C or more and less than 80°C, the first-stage target temperature Two1 increases to 70°C and 80°C as time progresses.

As described in the foregoing, in the second embodiment, the controller 50 increases, in the first stage, the first-stage target temperature Two1 as time progresses. The controller 50 increases, in the first stage, the first-stage target temperature Two1 as the compressor temperature Tshell increases. According to the second embodiment, following effects are achieved. In an early period of the first stage, a relatively low value is set as the first-stage target temperature Two1. Accordingly, a higher water flow rate can be obtained in the early period of the first stage, so that the COP in an early period of the first stage can be enhanced more. In the late period of the first stage, a relatively high value is set as the first-stage target temperature Two1. Accordingly, change in the target outlet temperature at the time of shifting from the first stage to the second stage can be reduced, and a rapid change in the water flow rate at the time of shifting from the first stage to the second stage can be reduced. As a result, the overshoot of the heat pump outlet temperature after shifting to the second stage can more reliably be reduced. Thus, deterioration in the COP due to the overshoot of the heat pump outlet temperature can more reliably be prevented.

In the second embodiment, whether the hot start or the cold start is determined by comparing the compressor temperature Tshell at the start of the heat accumulating operation with the threshold (for example, target hot water accumulation temperature Ths). In the present invention, the controller 50 may determine whether the hot start or the cold start not by the above determination method but by a following method which further reflects a rate of temperature increase in the shell of the compressor 14. The thermal capacity of the shell of the compressor 14 can be calculable based on the material and weight of the shell of the compressor 14. The amount of heat applied to the shell of the compressor 14 is represented as Qshell [kW]. The temperature of the compressor 14 is increased by heat released by a motor, heat released due to mechanical friction loss, and transfer of heat from the compressed high-temperature refrigerant. Qshell is equivalent to the sum of these amounts of heat. As the work of the compressor 14 is larger, Qshell increases. Consequently, Qshell is considered to be proportional to the electrical input applied to the compressor 14. Mass of the shell of the compressor 14 is represented as Mshell [kg]. Specific heat of the shell of the compressor 14 is represented as Cshell [kJ/kgK]. Temperature change in the shell of the compressor 14 per time is represented as $\Delta T/\Delta t$ [K/second]. A following expression is satisfied:

$$Qshell = Mshell \cdot Cshell \cdot \Delta T/\Delta t \quad (7)$$

When it is expected that the temperature of the shell of the compressor 14 reaches the threshold (for example, target hot water accumulation temperature Ths) in a short permissible time (for example, in one minute) after the start of the heat accumulating operation, the controller 50 may determine the hot start. A temperature increase width $\Delta T$ can be calculable by the expression (7), where $\Delta t$ represents permissible time and $\Delta T$ represents a temperature increase width in the shell of the compressor 14 during the permissible time $\Delta t$. In this way, the controller 50 calculates the temperature increase width $\Delta T$ during the permissible time $\Delta t$, and determines whether a following expression is satisfied:

$$Tshell + \Delta T \geq Ths \quad (8)$$

When the expression (8) is satisfied, it can be expected that the temperature of the shell of the compressor 14 reaches Ths that is the threshold in the permissible time $\Delta t$ after the start of the heat accumulating operation. Consequently, when the expression (8) is satisfied, the controller 50 may the hot start, and when the expression (8) is not satisfied, the controller 50 may determine the cold start.

Although the embodiments of the present invention have been described in the foregoing, the plurality of embodiments disclosed may optionally be combined in the present invention. Although the liquid to be heated is water in the description of the disclosed embodiments, the present invention is also applicable to heat pump apparatuses configured to heat liquids other than water, such as brine and antifreeze solution.

Reference Signs List

| | |
|---|---|
| 1 | heat pump apparatus |
| 2 | heat pump unit |
| 3 | tank unit |
| 4 | hot water tank |
| 5 | mixing valve |
| 6, 7 | conduit |
| 8 | water pump |
| 9, 10 | feed water pipe |
| 11, 12 | hot-water pipe |
| 13 | tank temperature sensor |
| 14 | compressor |
| 15 | water-refrigerant heat exchanger |
| 16 | high-low pressure heat exchanger |
| 17 | expansion valve |
| 18 | evaporator |
| 19 | compressor temperature sensor |
| 20 | temperature sensor |
| 21 | fan |
| 22 | outside air temperature sensor |
| 23 | discharge pipe |
| 50 | controller |

## Claims

1. A heat pump apparatus (1), comprising:

    a compressor (14) configured to compress refrigerant;
    a heat exchanger (15) configured to exchange heat between the refrigerant compressed by the compressor (14) and a liquid;
    a pump (8) configured to pump the liquid;
    a tank (4);
    a controller (50) configured to control heat accumulating operation in which the liquid heated in the heat exchanger (15) is accumulated in the tank (4); and
    means (19) for detecting compressor temperature, the compressor temperature being temperature of the compressor (14) or temperature of the refrigerant discharged from the compressor (14),
    a temperature sensor (20) for detecting heat pump outlet temperature, the heat pump outlet temperature being temperature of the liquid flowing out of the heat exchanger (15),
    **characterized in that** a start with the compressor temperature at start of the heat accumulating operation higher than a threshold is a hot start,
    wherein a start with the compressor temperature at start of the heat accumulating operation lower than the threshold is a cold start,
    wherein the controller (50) is configured to control, in a case of the hot start, a flow rate of the liquid using the pump (8) from a beginning of the heat accumulating operation so that the heat pump outlet temperature matches a target liquid temperature,
    wherein the controller (50) is configured to divide, in a case of the cold start, the heat accumulating operation into a first stage and a second stage, the second stage being after the first stage,
    wherein the controller (50) is configured to control, in the first stage of the heat accumulating operation with the cold start, the flow rate of the liquid using the pump (8) so that the heat pump outlet temperature matches a first-stage target temperature that is lower than the target liquid temperature,
    and wherein the controller (50) is configured to control, in the second stage of the heat accumulating operation with the cold start, the flow rate of the liquid using the pump (8) so that the heat pump outlet temperature matches a second-stage target temperature that is equal to the target liquid temperature.

2. The heat pump apparatus (1) according to claim 1, wherein
    the controller (50) is configured to control the pump (8) so that a flow rate of the liquid passing through the heat exchanger (15) in the first stage of the heat accumulating operation with the cold start is higher than a flow rate of the liquid passing through the heat exchanger (15) in the second stage of the heat accumulating operation with the cold start.

3. The heat pump apparatus (1) according to claim 1 or 2, wherein
    the controller (50) is configured to increase, in the first stage of the heat accumulating operation with the cold start, the first-stage target temperature as time progresses.

4. The heat pump apparatus (1) according to claim 1 or 2, wherein
    the controller (50) is configured to increase, in the first stage of the heat accumulating operation with the cold start, the first-stage target temperature as the compressor temperature increases.

## Patentansprüche

1. Wärmepumpenanordnung (1), die aufweist:
    einen Verdichter (14), der ausgebildet ist, ein Kältemittel zu verdichten;
    einen Wärmetauscher (15), der ausgebildet ist, Wärme zwischen dem durch den Verdichter (14) verdichteten Kältemittel und einer Flüssigkeit auszutauschen;
    eine Pumpe (8), die ausgebildet ist, die Flüssigkeit zu pumpen;
    einen Behälter (4);
    eine Steuerung (50), die ausgebildet ist, einen Wärmeakkumulierungsvorgang zu steuern, bei dem die in dem Wärmetauscher (15) erwärmte Flüssigkeit in dem Behälter (4) akkumuliert wird; und
    Mittel (19) zum Detektieren einer Verdichtertemperatur, wobei die Verdichtertemperatur eine Temperatur des Verdichters (14) oder eine Temperatur des von dem Verdichter (14) abgegebenen Kältemittels ist,

einen Temperatursensor (20) zum Detektieren einer Wärmepumpenauslasstemperatur, wobei die Wärmepumpenauslasstemperatur eine Temperatur der aus dem Wärmetauscher (15) ausströmenden Flüssigkeit ist,
**dadurch gekennzeichnet, dass** ein Start, bei dem die Verdichtertemperatur bei einem Start des Wärmeakkumulierungsvorgangs höher als ein Schwellenwert ist, ein Heißstart ist,
wobei ein Start, bei dem die Verdichtertemperatur bei einem Start des Wärmeakkumulierungsvorgangs niedriger als der Schwellenwert ist, ein Kaltstart ist,
wobei die Steuerung (50) ausgebildet ist, in einem Fall des Heißstarts eine Durchflussrate der Flüssigkeit mithilfe der Pumpe (8) ab einem Beginn des Wärmeakkumulierungsvorgangs derart zu steuern, dass die Wärmepumpenauslasstemperatur einer Sollflüssigkeits temperatur entspricht,
wobei die Steuerung (50) ausgebildet ist, in einem Fall des Kaltstarts den Wärmeakkumulierungsvorgang in eine erste Stufe und eine zweite Stufe zu unterteilen, wobei die zweite Stufe nach der ersten Stufe erfolgt,
wobei die Steuerung (50) ausgebildet ist, in der ersten Stufe des Wärmeakkumulierungsvorgangs bei dem Kaltstart die Durchflussrate der Flüssigkeit mithilfe der Pumpe (8) derart zu steuern, dass die Wärmepumpenauslasstemperatur einer Solltemperatur der ersten Stufe entspricht, die niedriger als die Sollflüssigkeitstemperatur ist,
und wobei die Steuerung (50) ausgebildet ist, in der zweiten Stufe des Wärmeakkumulierungsvorgangs bei dem Kaltstart die Durchflussrate der Flüssigkeit mithilfe der Pumpe (8) derart zu steuern, dass die Wärmepumpenauslasstemperatur einer Solltemperatur der zweiten Stufe entspricht, die gleich der Sollflüssigkeitstemperatur ist.

**2.** Wärmepumpenanordnung (1) nach Anspruch 1, wobei
die Steuerung (50) ausgebildet ist, die Pumpe (8) derart zu steuern, dass eine Durchflussrate der in der ersten Stufe des Wärmeakkumulierungsvorgangs bei dem Kaltstart durch den Wärmetauscher (15) strömenden Flüssigkeit höher als eine Durchflussrate der in der zweiten Stufe des Wärmeakkumulierungsvorgangs bei dem Kaltstart durch den Wärmetauscher (15) strömenden Flüssigkeit ist.

**3.** Wärmepumpenanordnung (1) nach Anspruch 1 oder 2, wobei
die Steuerung (50) ausgebildet ist, in der ersten Stufe des Wärmeakkumulierungsvorgangs bei dem Kaltstart im Zeitverlauf die Solltemperatur der ersten Stufe zu erhöhen.

**4.** Wärmepumpenanordnung (1) nach Anspruch 1 oder 2, wobei
die Steuerung (50) ausgebildet ist, in der ersten Stufe des Wärmeakkumulierungsvorgangs bei dem Kaltstart bei steigender Verdichtertemperatur die Solltemperatur der ersten Stufe zu erhöhen.

## Revendications

**1.** Appareil de pompe à chaleur (1), comprenant :

un compresseur (14) configuré pour comprimer un réfrigérant ;
un échangeur thermique (15) configuré pour échanger de la chaleur entre le réfrigérant comprimé par le compresseur (14) et un liquide ;
une pompe (8) configurée pour pomper le liquide ;
un réservoir (4) ;
un contrôleur (50) configuré pour contrôler une opération d'accumulation de chaleur au cours de laquelle le liquide chauffé dans l'échangeur thermique (15) est accumulé dans le réservoir (4) ; et
un moyen (19) pour détecter la température du compresseur, la température du compresseur étant la température du compresseur (14) ou la température du réfrigérant évacué par le compresseur (14),
un capteur de température (20) pour détecter la température de sortie de la pompe à chaleur, la température de sortie de la pompe à chaleur étant la température du liquide qui sort de l'échangeur thermique (15),
**caractérisé en ce qu'**un démarrage avec la température du compresseur au début de l'opération d'accumulation de chaleur supérieure à un seuil est un démarrage à chaud,
dans lequel un démarrage avec la température du compresseur au début de l'opération d'accumulation de chaleur inférieure à un seuil est un démarrage à froid,
dans lequel le contrôleur (50) est configuré pour contrôler, en cas de démarrage à chaud, un débit du liquide à l'aide de la pompe (8) depuis un début de l'opération d'accumulation de chaleur de sorte que la température de sortie de la pompe à chaleur corresponde à une température de liquide cible,
dans lequel le contrôleur (50) est configuré pour diviser, en cas de démarrage à froid, l'opération d'accumulation de chaleur en un premier étage et un second étage, le second étage se trouvant après le premier étage,
dans lequel le contrôleur (50) est configuré pour contrôler, dans le premier étage de l'opération d'accumulation de chaleur avec le démarrage à froid, le débit du liquide à l'aide de la pompe (8) de sorte que la température de sortie de la pompe à chaleur corresponde à une température cible de premier étage qui est inférieure à la température de liquide cible,
et dans lequel le contrôleur (50) est configuré pour contrôler, dans le second étage de l'opération d'accumulation de chaleur avec le démarrage à froid, le débit du liquide à l'aide de la pompe (8) de sorte que la température de sortie de la pompe à chaleur corresponde à une température cible de second étage qui est égale à la température de liquide cible.

**2.** Appareil de pompe à chaleur (1) selon la revendication 1, dans lequel
le contrôleur (50) est configuré pour contrôler la pompe (8) de sorte qu'un débit du liquide qui passe par l'échangeur thermique (15) dans le premier étage de l'opération d'accumulation de chaleur avec le démarrage à froid soit supérieur à un débit du liquide qui passe par l'échangeur thermique (15) dans le second étage de l'opération d'accumulation de chaleur avec le démarrage à froid.

**3.** Appareil de pompe à chaleur (1) selon la revendication 1 ou 2, dans lequel
le contrôleur (50) est configuré pour augmenter, dans le premier étage de l'opération d'accumulation de chaleur avec le démarrage à froid, la température cible de premier étage au fil du temps.

**4.** Appareil de pompe à chaleur (1) selon la revendication 1 ou 2, dans lequel
le contrôleur (50) est configuré pour augmenter, dans le premier étage de l'opération d'accumulation de chaleur avec le démarrage à froid, la température cible de premier étage au fur et à mesure que la température du compresseur augmente.

FIG. 1

1
2
3
4
5
6
7
8
9
10
11
12
13
50

FIG. 2

2
6
7
14
15
16
17
18
19
20
21
22
23

FIG. 3
HEAT PUMP OUTLET TEMPERATURE
A
FIRST STAGE
SECOND STAGE
START
TIME
FIG. 4
WATER FLOW RATE
FIRST STAGE
SECOND STAGE
B
START
TIME

FIG. 5

FIRST STAGE
SECOND STAGE
COP
C
START
TIME

FIG. 6

START CALCULATING V1

ASSUME INITIAL VALUE OF V1 S1

CALCULATE Q1 S2

CALCULATE V2 S3

CALCULATE Q2 S4

S5 Q1+Q2≧Qd?

NO

YES

END CALCULATING V1 S7

S6 REASSUME VALUE OF V1

FIG. 7
START
S11
Tshell<Ths?
NO
S12
Two=Ths
YES
S13
Tshell≧50℃?
NO
S14
Two1=50℃
YES
S15
Tshell≧60℃?
NO
S16
Two1=50℃
YES
S17
Tshell≧70℃?
NO
S18
Two1=60℃
YES
S19
Tshell≧80℃?
NO
S20
Two1=70℃
YES
S21
Two1=80℃
RETURN

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000346449 A
- DE 102009007259 A1
- EP 1298395 A2
- JP 2002250560 A
- JP 2001255005 A